# EUROPEAN PATENT APPLICATION

(11) **EP 4 769 900 A1**
(43) Date of publication of application: **01.07.2026**
(21) Application number: 24864363.7
(22) Date of filing: 13.08.2024
(51) Int. Cl.: H02J 50/10

(54) **ISOLATED POWER SUPPLY CHIP AND POWER CONVERSION APPARATUS**

(30) Priority: 13.09.2023 CN 202311184595
(71) Applicant: Huawei Digital Power Technologies Co., Ltd., Shenzhen, Guangdong 518043 (CN)
(72) Inventor: LI, Shanshan, Shenzhen, Guangdong 518043 (CN); NIE, Yanlin, Shenzhen, Guangdong 518043 (CN); PENG, Xingqiang, Shenzhen, Guangdong 518043 (CN); DONG, Shaoqing, Shenzhen, Guangdong 518043 (CN)
(74) Representative: Maiwald GmbH
(86) International application number: PCT/CN2024/111857
(87) International publication number: WO 2025/055640

(57) **Abstract**

This application provides an isolated power chip and a power conversion device. The isolated power chip includes a transformer, a transmitting module, and a plurality of receiving modules. The transformer, the transmitting module, and the plurality of receiving modules are packaged in a same housing. The transformer includes a primary coil and a plurality of secondary coils. The transmitting module is configured to transmit, to each secondary coil through the primary coil, electric energy provided by a power supply. Each receiving module is configured to transmit the electric energy to a load through a connected secondary coil. According to this application, a plurality of output ends satisfying electrical isolation can be provided and space utilization is high, thereby improving integration and applicability of a device and reducing design costs.

## Description

This application claims priority to Chinese Patent Application No. 202311184595.6, filed with the China National Intellectual Property Administration on September 13, 2023 and entitled "ISOLATED POWER CHIP AND POWER CONVERSION DEVICE", which is incorporated herein by reference in its entirety.

### TECHNICAL FIELD

This application relates to the field of power electronics technologies, and in particular, to an isolated power chip and a power conversion device.

### BACKGROUND

In the field of power electronics technologies, a chip (for example, an isolated power chip) having an electrical isolation function is usually needed for electrical connection isolation between a power supply end and a load end. The chip having the electrical isolation function includes an internal device having the electrical isolation function, such as a transformer, and can transmit energy through a primary coil and a secondary coil of the transformer and maintain a capability of isolating the power supply end from the load end when a voltage at the power supply end is very high. In a research and practice process, It is found that in conventional technologies, an isolated voltage chip usually provides only one output end satisfying electrical isolation. When a plurality of channels of output are required, a board layout area is large and space utilization is low. This is not conducive to further implementation of modular integration.

### SUMMARY

This application provides an isolated power chip and a power conversion device, so that a plurality of output ends satisfying an electrical isolation requirement can be provided and space utilization is high, thereby improving integration and applicability of a device and reducing design costs.

According to a first aspect, this application provides an isolated power chip. The isolated power chip may include a transformer, a transmitting module, and a plurality of receiving modules. Herein, the transformer, the transmitting module, and the plurality of receiving modules are packaged in a same housing, and the transformer may include a primary coil and a plurality of secondary coils. Herein, an input end of the transmitting module is configured to connect to a power supply, an output end of the transmitting module is connected to the primary coil, an input end of each receiving module is separately connected to one of the secondary coils, and an output end of each receiving module is configured to connect to a load. The transmitting module herein may be configured to transmit, to each secondary coil through the primary coil, electric energy provided by the power supply. Each receiving module herein may be configured to transmit the electric energy to the load through the connected secondary coil.

In this application, the transformer in the isolated power chip includes one primary coil and a plurality of secondary coils. The transmitting module may transmit the electric energy to the plurality of secondary coils through the primary coil in the transformer. The corresponding receiving modules connected to the secondary coils may separately receive the electric energy transmitted by the transformer, and then transmit the electric energy to the load through a plurality of channels of output. Herein, when the plurality of secondary coils supply power to the load, output voltages transmitted to the load may be the same or may be different, and output currents transmitted to the load may be the same or may be different. It may be understood that, in the isolated power chip, due to electrical isolation between the primary coil and the plurality of secondary coils, a capability of isolating a power supply end from a load end can be maintained when a voltage at the power supply end is very high, so that a plurality of channels of electric energy output may be provided separately for the load while a requirement for safe power supply is satisfied, to adapt to different application scenarios, improve integration of the chip, save occupied board space, and reduce design costs.

With reference to the first aspect, in a first possible implementation, the plurality of receiving modules include at least one feedback receiving module, the isolated power chip further includes an isolation module, and the feedback receiving module is connected to the transmitting module through the isolation module. The feedback receiving module herein may be further configured to generate a feedback signal based on an input current and/or an input voltage of the secondary coil that is connected to the feedback receiving module, and transmit the feedback signal to the transmitting module through the isolation module. The transmitting module herein may be further configured to adjust a transmit current and/or a transmit voltage of the primary coil based on the feedback signal. Herein, the feedback receiving module among the receiving modules may have a feedback function while receiving the electric energy. The feedback receiving module herein may generate the feedback signal based on an input parameter, such as an amplitude of the input current and/or an amplitude of the input voltage of the secondary coil that is connected to the feedback receiving module, and transmit the feedback signal to the transmitting module through the isolation module, so that the transmitting module or another control module at an electric energy transmit end may adjust a transmit parameter, such as the transmit current or the transmit voltage of the primary coil, based on the feedback signal. In other words, the feedback receiving module herein may generate the corresponding feedback signal by using the input parameter of the secondary coil that is connected to the feedback receiving module, and then adjust the transmit parameter of the primary coil based on the feedback signal, thereby improving power supply efficiency and power supply stability while satisfying a requirement for safe power supply.

With reference to the first aspect or the first possible implementation of the first aspect, in a second possible implementation, the primary coil and the plurality of secondary coils of the transformer may be planar coils. Herein, the coils of the transformer are planar coils, and may be arranged on one or more planes, to further improve the integration of the chip, save the occupied board space, and reduce the design costs.

With reference to any one of the first aspect or the possible implementations of the first aspect, in a third possible implementation, the primary coil and the plurality of secondary coils are arranged on a same plane. Herein, when the plane is a circuit board or another board structure having a front side and a reverse side, the primary coil and the secondary coils in the transformer may be arranged on the front side or the reverse side of the plane, or may be arranged on the front side and the reverse side of the plane. Herein, the plurality of secondary coils may be arranged centrally symmetric about the primary coil, or may be arranged based on a corresponding coupling coefficient that is obtained from an application scenario, to further improve the integration of the chip, save the occupied board space, and reduce the design costs.

With reference to any one of the first aspect or the possible implementations of the first aspect, in a fourth possible implementation, the primary coil may be arranged on one plane, and the plurality of secondary coils may be arranged on another plane. In this application, the primary coil may be arranged on a layer of circuit board or a board structure, and the plurality of secondary coils may be arranged on another layer of circuit board or another board structure. It may be understood that the plurality of secondary coils may be arranged on a front side or a reverse side of a plane on which the secondary coils are located, or may be arranged on the front side and the reverse side of the plane. Herein, the plurality of secondary coils may be arranged centrally symmetric about projection of the primary coil, or may be arranged based on a corresponding coupling coefficient that is obtained from an application scenario, to further improve the integration of the chip, save the occupied board space, and reduce the design costs.

With reference to any one of the first aspect or the possible implementations of the first aspect, in a fifth possible implementation, the primary coil may be arranged on one plane, and one or more of the plurality of secondary coils may be separately arranged on a plurality of other planes, where one or more secondary coils are arranged on each of the plurality of other planes. In other words, if a quantity of secondary coils in the transformer is n, k secondary coils among the n secondary coils may be separately and correspondingly arranged on k layers of circuit boards or k board structures, where k is less than or equal to n. When k is less than n, the other n-k secondary coils may be correspondingly arranged on j layers of circuit boards or j board structures, where any one of the j layers of circuit boards or the j board structures includes at least two secondary coils. Herein, center points of the secondary coils on the k layers of circuit boards or the k board structures may be arranged to coincide with a center point of the projection of the primary coil, and the secondary coils on the j layers of circuit boards or the j board structures may be arranged centrally symmetric about the projection of the primary coil, or arrangement may be made based on a corresponding coupling coefficient that is obtained from an application scenario, to further improve the integration of the chip, save the occupied board space, and reduce the design costs.

With reference to any one of the first aspect or the possible implementations of the first aspect, in a sixth possible implementation, the transformer may further include a magnetic core, and the magnetic core may be arranged on periphery of the primary coil and the plurality of secondary coils. Herein, the magnetic core is arranged on the periphery of the primary coil and the secondary coils, to prevent magnetic field leakage from the coils and further improve efficiency of electric energy transmission.

With reference to any one of the first aspect or the possible implementations of the first aspect, in a seventh possible implementation, the magnetic core herein may be a magnetic core of an integral structure or a magnetic core formed by combining a plurality of partial structures. Herein, the magnetic core may be selected, based on different specifications such as a coil size and an arrangement manner, from a corresponding integrated magnetic core or a magnetic core formed by combining a plurality of partial structures. Herein, an outer surface of the magnetic core may be a planar surface, or may be a cambered surface, or may be a combination of a planar surface and a cambered surface. This may be specifically arranged based on an application scenario to enhance applicability.

With reference to any one of the first aspect or the possible implementations of the first aspect, in an eighth possible implementation, the isolation module may include at least one of a transformer, an optocoupler, or a capacitor. Herein, when the feedback receiving module transmits the feedback signal to the transmitting module, the isolation module may provide electrical isolation for the feedback receiving module and the transmitting module, thereby ensuring power supply safety.

According to a second aspect, this application provides a power conversion device. The power conversion device may include the isolated power chip according to any one of the first aspect or the possible implementations of the first aspect, a drive circuit, and a power conversion circuit. Herein, output ends of a plurality of receiving modules are configured to connect to the power conversion circuit through the drive circuit, and an output end of the power conversion circuit is configured to connect to a load. Herein, the drive circuit may be configured to receive electric energy provided by the isolated power chip, and drive the power conversion circuit to perform power conversion. Herein, the isolated power chip may maintain a capability of isolating a power supply end from the drive circuit when a voltage at the power supply end is very high, so that a plurality of channels of drive voltages may be provided separately for the drive circuit while a requirement for safe power supply is satisfied, to adapt to different application scenarios and improve integration of the chip. In this way, the drive circuit may transmit a corresponding drive signal to the power conversion circuit, so that power is supplied to the load after the power conversion circuit performs corresponding power conversion on the electric energy. Herein, the electric energy received by the power conversion circuit may be electric energy directly provided by the power supply or electric energy provided by another functional module, or may be electric energy provided by another power supply.

### BRIEF DESCRIPTION OF DRAWINGS

FIG. 1 is a diagram of an application scenario of an isolated power chip according to an embodiment of this application;
FIG. 2 is a diagram of a structure of an isolated power chip according to an embodiment of this application;
FIG. 3 is a diagram of a structure of a transformer according to an embodiment of this application;
FIG. 4 is a diagram of another structure of a transformer according to an embodiment of this application;
FIG. 5 is a diagram of still another structure of a transformer according to an embodiment of this application;
FIG. 6 is a diagram of yet another structure of a transformer according to an embodiment of this application;
FIG. 7 is a diagram of still yet another structure of a transformer according to an embodiment of this application;
FIG. 8 is a diagram of a further structure of a transformer according to an embodiment of this application;
FIG. 9 is a diagram of a still further structure of a transformer according to an embodiment of this application;
FIG. 10 is a diagram of another structure of an isolated power chip according to an embodiment of this application; and
FIG. 11 is a diagram of a structure of a power conversion device according to an embodiment of this application.

### DESCRIPTION OF EMBODIMENTS

An isolated power chip provided in this application is applicable to a plurality of application fields such as a field of renewable-energy power generation, a field of peak shaving and frequency regulation in conventional power generation, and a field of supplying power to an important device. This may be specifically determined based on an actual application scenario, and is not limited herein. A power conversion device provided in this application is applicable to various scenarios, such as a large photovoltaic power station, industrial and commercial photovoltaic power generation, and household photovoltaic power generation, and is not limited herein. The following uses an industrial and commercial power supply environment as an example of an application scenario of the isolated power chip for description, which is not re-stated in the following description.

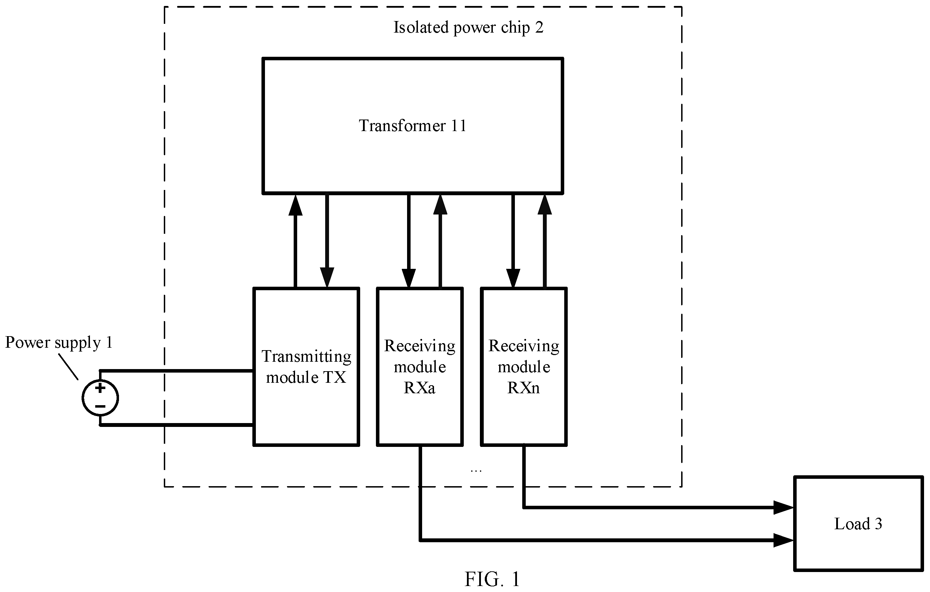

Refer to FIG. 1. FIG. 1 is a diagram of an application scenario of an isolated power chip according to an embodiment of this application. In a power supply system, as shown in FIG. 1, the power supply system includes a power supply 1, an isolated power chip 2, and a load 3. Herein, an input end of the isolated power chip 2 may be configured to connect to the power supply 1, and a plurality of output ends of the isolated power chip 2 may be configured to connect to the load 3. In some feasible implementations, the isolated power chip 2 may transmit, to the load 3 in a condition of satisfying electrical isolation, electric energy provided by the power supply 1, and convert an output parameter such as a voltage or a current of output electric energy into a magnitude that matches the load 3. Herein, the isolated power chip 2 may include a transformer 11, a transmitting module TX, and a plurality of receiving modules RX. The transmitting module TX may transmit, to the plurality of receiving modules RX such as receiving modules RXa to RXn through the transformer 11 in the condition of satisfying electrical isolation, electric energy input by the power supply 1. The plurality of receiving modules RX such as the receiving modules RXa to RXn may receive electric energy output by the transformer, and transmit the received electric energy to the load 3 through a plurality of channels. It may be understood that, the power supply 1 provided in this application is applicable to an application scenario in which power is supplied to a plurality of types of electric devices, for example, power is supplied to base station equipment in a remote area where there is no mains power supply or there is a poor mains power supply, or power is supplied to household devices (such as a refrigerator and an air conditioner). This may be specifically determined based on an actual application scenario, and is not limited herein. Further, it may be understood that the load 3 in FIG. 1 may include an electric device or an electric power transmission device, such as a transmission line, an electric power relay station, a communication base station, or a home device. The load 3 herein is merely used as an example to represent an electric device or an electric circuit that may be connected to an output end of the isolated power chip 2. Different receiving modules RX may output electric energy to different ports of one load 3, or may output electric energy to different loads in the load 3. This may be specifically determined based on an actual application scenario and is not limited herein.

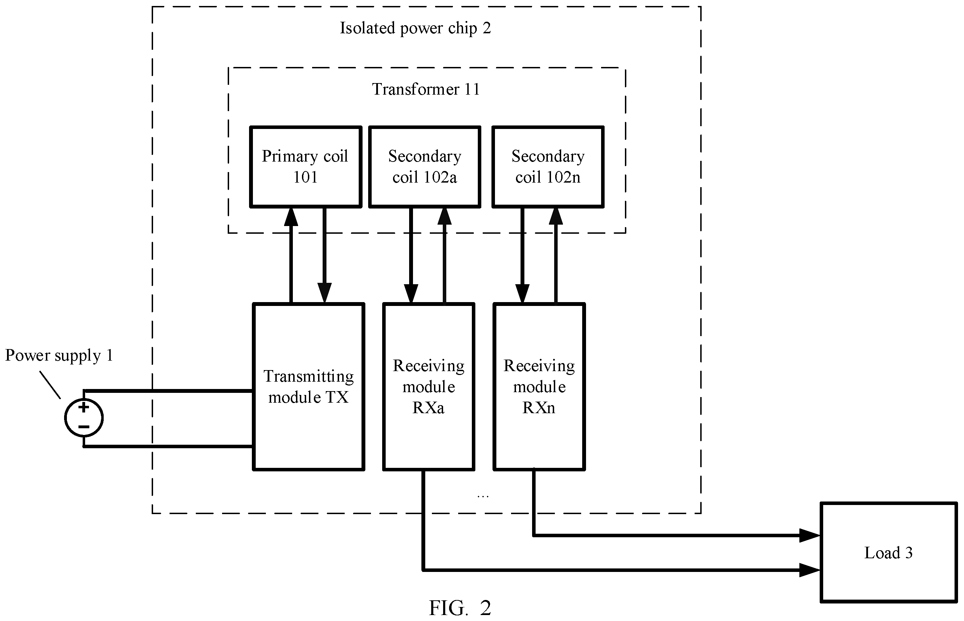

In some application scenarios, a load end may require the isolated power chip 2 to provide, on a premise of satisfying electrical isolation, a plurality of channels of electric energy output for the load end. Herein, output parameters of the plurality of channels of electric energy output may be the same or may be different. For example, a plurality of charging guns may be arranged on a charging pile for new energy vehicles, to separately charge different vehicles, and output parameters of electric energy output by these different charging guns may be the same or may be different. For another example, in a power management system of a new energy vehicle, electric energy with different output voltages or different output currents usually needs to be separately provided for a circuit having different functions, such as a functional circuit configured to detect vehicle performance and a drive circuit configured to perform power drive. A conventional chip having an isolation function usually provides only one output end satisfying electrical isolation. When a plurality of channels of output are required, a board layout area is large and space utilization is low. This is not conducive to further implementation of modular integration. To resolve this problem, this application provides an isolated power chip with a plurality of channels of output. Specifically, refer to FIG. 2. FIG. 2 is a diagram of a structure of an isolated power chip according to an embodiment of this application. As shown in FIG. 2, the isolated power chip 2 may include a transformer 11, a transmitting module TX, and a plurality of receiving modules RX such as receiving modules RXa to RXn. Herein, the transformer 11, the transmitting module TX, and the plurality of receiving modules RX are packaged in a same housing. The transformer 11 may include a primary coil 101 and a plurality of secondary coils 102 such as secondary coils 102a to 102n. The plurality of secondary coils 102 are in a one-to-one correspondence with the plurality of receiving modules RX. Herein, an input end of the transmitting module TX may be configured to connect to a power supply 1, an output end of the transmitting module TX may be connected to the primary coil 101, an output end of each receiving module RX may be separately configured to connect to a load 3, and an input end of each receiving module RX may be separately connected to a secondary coil 102 corresponding to each receiving module RX. The transmitting module TX herein may be configured to transmit, to each secondary coil 102 through the primary coil 101, electric energy provided by the power supply. Each receiving module RX herein may be configured to transmit electric energy to the load 3 through the connected secondary coil 102. A specific electric energy transmission direction may be shown by black arrows in the figure. In some application scenarios, the load end may transmit information or energy to the isolated power chip 2, and a direction in which the information or energy is transmitted may be shown by gray arrows in the figure. This may be specifically determined based on an application scenario, and is not limited herein.

In this application, the transformer 11 in the isolated power chip 2 includes one primary coil 101 and a plurality of secondary coils 102, such as the secondary coils 102a to 102n. The transmitting module TX may transmit electric energy to the plurality of secondary coils 102 through the primary coil 101 in the transformer 11. The corresponding receiving modules RX connected to the secondary coils 102 may separately receive electric energy transmitted by the transformer 11, and then transmit the electric energy to the load 3 through a plurality of channels of output. Herein, when the plurality of secondary coils 102 supply power to the load 3, output voltages transmitted to the load 3 may be the same or may be different, and output currents transmitted to the load 3 may be the same or may be different. It may be understood that, in the isolated power chip 2, due to electrical isolation between the primary coil 101 and the plurality of secondary coils 102, a capability of isolating a power supply end from the load end can be maintained when a voltage at the power supply end is very high, so that a plurality of channels of electric energy output may be provided separately for the load 3 while a requirement for safe power supply is satisfied, to adapt to different application scenarios, improve integration of the chip, save occupied board space, and reduce design costs.

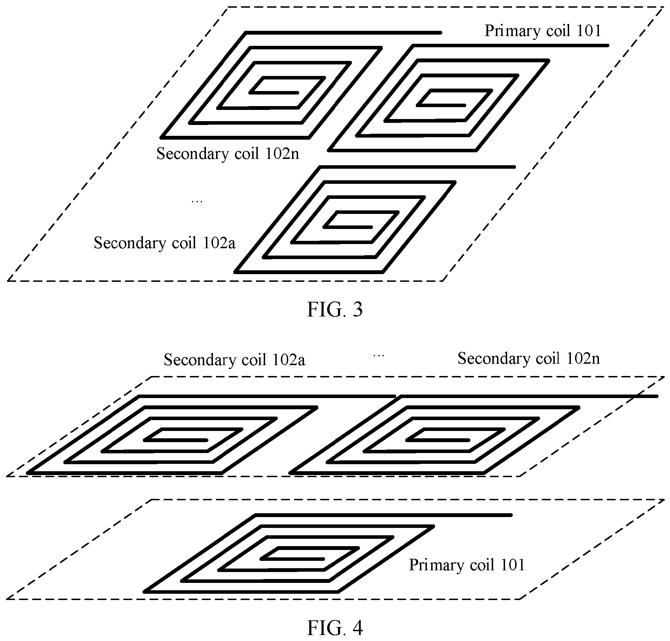

In some feasible implementations, the primary coil 101 and the plurality of secondary coils 102 in the transformer 11 may be planar coils, and may be arranged on one or more planes, to further improve the integration of the chip, save the occupied board space, and reduce the design costs. The following describes, by using examples with reference to FIG. 3 to FIG. 9, a structure of the transformer in the isolated power chip provided in this application.

In some feasible implementations, refer to FIG. 3. FIG. 3 is a diagram of a structure of a transformer according to an embodiment of this application. As shown in FIG. 3, a primary coil 101 and secondary coils 102a to 102n may be arranged on a same plane. Herein, the plane on which the primary coil 101 and the secondary coils 102a to 102n are located may be a layer of circuit board or another board structure having a front side and a reverse side. The primary coil 101 and the secondary coils 102a to 102n in the transformer 11 may be all arranged on the front side of the plane or all arranged on the reverse side of the plane; or one portion of the coils may be arranged on the front side of the plane, and the other portion of the coils may be arranged on the reverse side of the plane. Herein, the secondary coils 102a to 102n may be arranged centrally symmetric about the primary coil 101. In other words, an included angle between two adjacent secondary coils 102 with respect to a center of the primary coil 101 is 360/n, where n is a quantity of secondary coils. Herein, the secondary coils 102a to 102n may alternatively be arranged based on a corresponding coupling coefficient that is obtained from an application scenario, to further improve the integration of the chip, save the occupied board space, and reduce the design costs.

It may be understood that the primary coil 101 and the secondary coils 102 herein may alternatively be multi-layer planar coils. One or more layers of the multi-layer planar coil may be arranged on a front side of a plane on which the coil is located, and the other layer or layers of the multi-layer planar coil may be arranged on a reverse side of the plane on which the coil is located. It may be further understood that the coils in the transformer described in this application may be single-layer planar coils, or may be multi-layer planar coils. In this application, structures of the coils in the transformer are described by using only single-layer planar coils as an example. This may be specifically arranged based on an application scenario, and is not described in detail below. In addition, in this application, a position relationship of each coil in the transformer is described by using only square coils as an example. Each coil in the transformer described in this application may be a square planar coil, a circular planar coil, or a planar coil of another shape; or may be that one portion is a planar coil of a specific type, and the other portion is another planar coil. This may be specifically arranged based on an application scenario, and is not described in detail herein. In addition, it may be understood that a front side and a reverse side of a plane, a circuit board, or a planar structure described herein are only one side and another side of the plane, the circuit board, or the planar structure. This may be specifically arranged based on an application scenario, and is not described in detail below.

In some feasible implementations, refer to FIG. 4. FIG. 4 is a diagram of another structure of a transformer according to an embodiment of this application. As shown in FIG. 4, a primary coil 101 may be arranged on one plane, and secondary coils 102a to 102n may be arranged on another plane. In this application, the primary coil 101 may be arranged on a layer of circuit board or a board structure, and the secondary coils 102a to 102n may be arranged on another layer of circuit board or another board structure. It may be understood that the secondary coils 102a to 102n may both be arranged on a front side or a reverse side of one plane, or one portion of the secondary coils 102 may be arranged on the front side of the plane, and the other portion of the secondary coils 102 may be arranged on the reverse side of the plane. Herein, the secondary coils 102a to 102n may be arranged centrally symmetric about the primary coil 101. In other words, an included angle between two adjacent secondary coils 102 with respect to a center of the primary coil 101 is 360/n, where n is a quantity of secondary coils. The secondary coils 102a to 102n may alternatively be arranged based on a corresponding coupling coefficient that is obtained from an application scenario, to further improve the integration of the chip, save the occupied board space, and reduce the design costs.

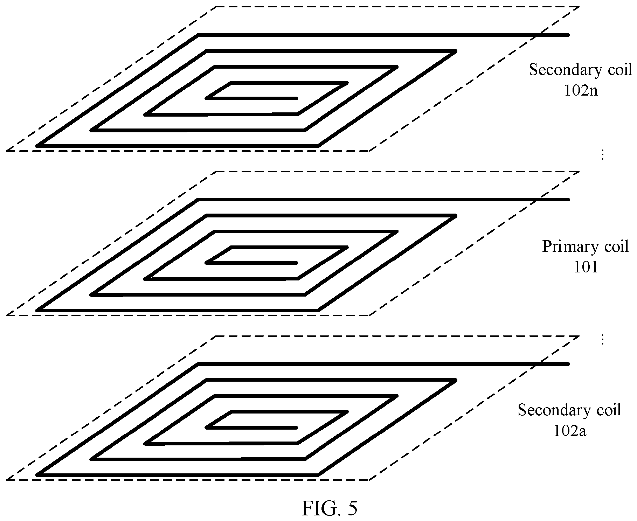

In some feasible implementations, refer to FIG. 5. FIG. 5 is a diagram of still another structure of a transformer according to an embodiment of this application. As shown in FIG. 5, a primary coil 101 may be arranged on one plane, and secondary coils 102a to 102n may be separately arranged on n other planes. The n other planes are in a one-to-one correspondence with the plurality of secondary coils 102. Herein, n is a quantity of secondary coils. In this application, the primary coil 101 may be arranged on a layer of circuit board or a board structure, and the secondary coils 102a to 102n may be separately and correspondingly arranged on other n layers of circuit boards or other n board structures. Herein, a center point of each secondary coil 102 among the secondary coils 102a to 102n may be separately arranged to coincide with a center point of projection of the primary coil 101 on a plane on which the secondary coil 102 is located, or arrangement may be made based on a corresponding coupling coefficient that is obtained from an application scenario, to further improve the integration of the chip, save the occupied board space, and reduce the design costs.

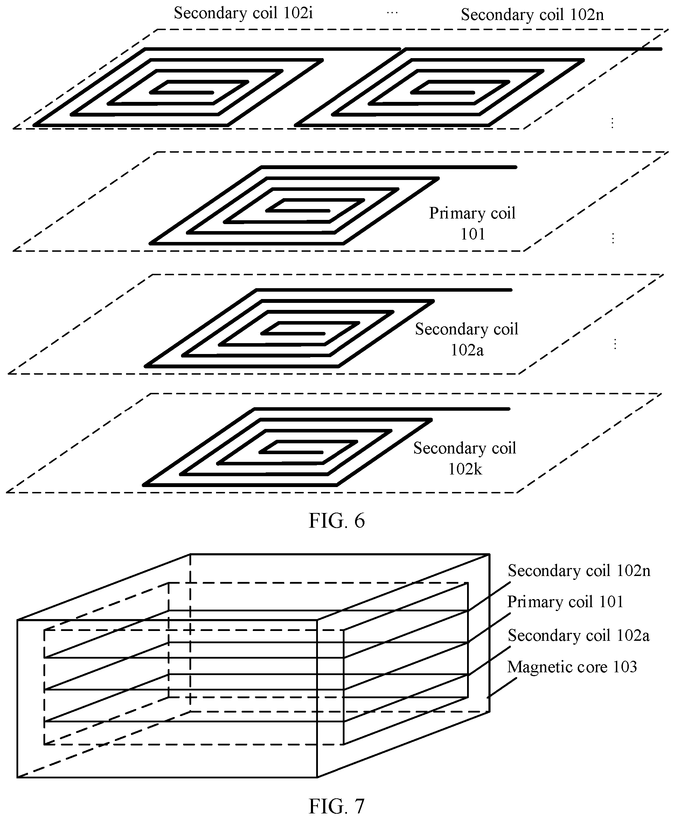

In some feasible implementations, refer to FIG. 6. FIG. 6 is a diagram of yet another structure of a transformer according to an embodiment of this application. As shown in FIG. 6, a primary coil 101 may be arranged on one plane, and one or more secondary coils 102 among secondary coils 102a to 102n may be separately arranged on one or more other planes, where any one of the other planes may include one or more secondary coils 102. In other words, if a quantity of secondary coils 102 in the transformer 11 is n, k secondary coils 102 (for example, secondary coils 102a to 102k) among the n secondary coils 102 may be separately and correspondingly arranged on k layers of circuit boards or k board structures, and the other n-k secondary coils 102 (for example, secondary coils 102i to 102n) may be correspondingly arranged on j layers of circuit boards or j board structures, where any one of the j layers of circuit boards or the j board structures includes at least two secondary coils 102. Herein, center points of the secondary coils 102 on the k layers of circuit boards or the k board structures may be arranged to coincide with a center point of projection of the primary coil 101, and the secondary coils 102 on the j layers of circuit boards or the j board structures may be arranged centrally symmetric about the projection of the primary coil 101, or arrangement may be made based on a corresponding coupling coefficient that is obtained from an application scenario, to further improve the integration of the chip, save the occupied board space, and reduce the design costs. It may be understood that the k layers of circuit boards or the k board structures herein may be freely arranged above and/or below a plane on which the primary coil 101 is located. In addition, it may be understood that the j layers of circuit boards or the j board structures herein may be freely arranged above and/or below the plane on which the primary coil 101 is located. Specifically, arrangement may be made based on an application scenario and a coefficient of coupling between the coils. This is not limited herein.

In some feasible implementations, the transformer 11 may further include a magnetic core, and the magnetic core may be arranged on periphery of the primary coil 101 and the plurality of secondary coils 102. For details, refer to FIG. 7. FIG. 7 is a diagram of still yet another structure of a transformer according to an embodiment of this application. As shown in FIG. 7, the transformer 11 further includes a magnetic core 103, and the magnetic core 103 may be arranged on the periphery of a primary coil 101 and a plurality of secondary coils 102. Herein, the magnetic core 103 is arranged on the periphery of the primary coil 101 and the plurality of secondary coils 102 in a "square" shape, to prevent magnetic field leakage from the coils and further improve efficiency of electric energy transmission. Herein, shadow represents planes on which the primary coil 101 and the secondary coils 102a to 102n are located, and no specific coil structure is shown. It may be understood that, in some application scenarios requiring further prevention of magnetic field leakage from the coils, the magnetic core 103 may be further arranged with magnetic cores at cross sections on two sides of the "square"-shaped magnetic core in FIG. 7 while an interface for wiring each coil is reserved at the same time, to further enhance magnetic shielding performance of the transformer.

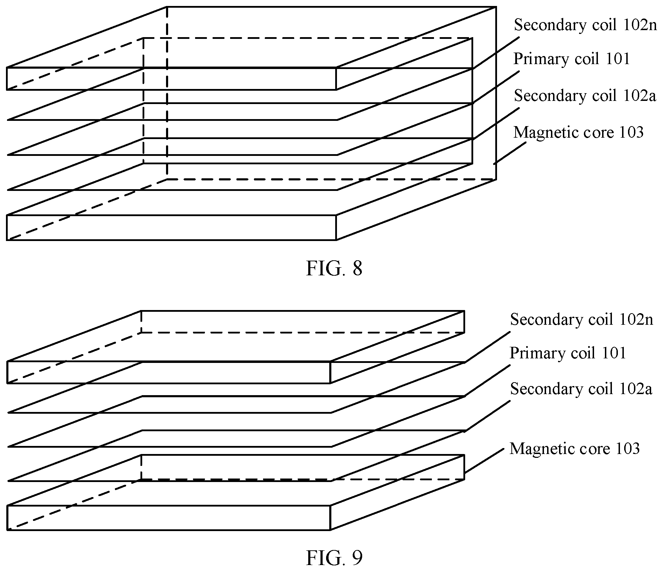

In some feasible implementations, the magnetic core in the transformer may alternatively be in another shape. Refer to FIG. 8. FIG. 8 is a diagram of a further structure of a transformer according to an embodiment of this application. As shown in FIG. 8, a magnetic core 103 herein is arranged on the periphery of a primary coil 101 and a plurality of secondary coils 102 in a "C" shape, to prevent magnetic field leakage from the coils and further improve efficiency of electric energy transmission. Herein, shadow represents planes on which the primary coil 101 and the secondary coils 102a to 102n are located, and no specific coil structure is shown.

In some feasible implementations, the magnetic core in the transformer may alternatively be in another shape. Refer to FIG. 9. FIG. 9 is a diagram of a still further structure of a transformer according to an embodiment of this application. As shown in FIG. 9, a magnetic core 103 herein is arranged on the periphery of a primary coil 101 and a plurality of secondary coils 102 in a "two-tiered" shape, to prevent magnetic field leakage from the coils and further improve efficiency of electric energy transmission. Herein, shadow represents planes on which the primary coil 101 and the secondary coils 102a to 102n are located, and no specific coil structure is shown.

In some feasible implementations, the magnetic core 103 herein may be a magnetic core of an integral structure or a magnetic core formed by combining a plurality of partial structures. Herein, the magnetic core 103 may be selected, based on different specifications such as a coil size and an arrangement manner, from a corresponding integrated magnetic core or a magnetic core formed by combining a plurality of partial structures. Herein, an outer surface of the magnetic core 103 may be a planar surface, or may be a cambered surface, or may be a combination of a planar surface and a cambered surface. This may be specifically arranged based on an application scenario to enhance applicability.

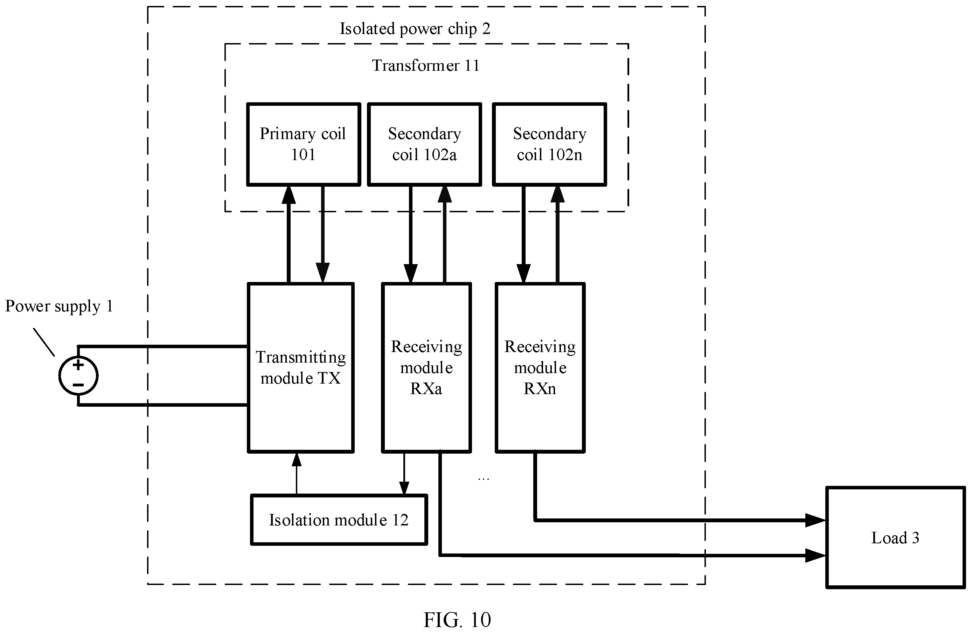

In some feasible implementations, a receiving module in the isolated power chip further has a feedback function. For details, refer to FIG. 10. FIG. 10 is a diagram of another structure of an isolated power chip according to an embodiment of this application. As shown in FIG. 10, N receiving modules RX, namely, receiving modules RXa to RXn, may include at least one feedback receiving module RX (for example, the receiving module RXa is the feedback receiving module, that is, the receiving module RXa is a receiving module having the feedback function). Herein, the isolated power chip 2 may further include an isolation module 12, and the receiving module RXa may be connected to a transmitting module TX through the isolation module 12. The feedback receiving module RX herein may be further configured to generate a feedback signal based on an input current and/or an input voltage of a secondary coil 102 that is connected to the feedback receiving module RX, and transmit the feedback signal to the transmitting module TX through the isolation module 12. The transmitting module TX herein may be further configured to adjust a transmit current and/or a transmit voltage of the primary coil 101 based on the feedback signal. Herein, the feedback receiving module RX among the receiving modules RX may have the feedback function while receiving electric energy. The feedback receiving module RX herein may generate the feedback signal based on an input parameter, such as an amplitude of the input current and/or an amplitude of the input voltage of the secondary coil 102 that is connected to the feedback receiving module RX, and transmit the feedback signal to the transmitting module TX through the isolation module 12, so that the transmitting module TX or another control module at an electric energy transmit end may adjust a transmit parameter, such as the transmit current or the transmit voltage of the primary coil 101, based on the feedback signal. For example, when the input current and/or the input voltage of the secondary coil 102a that is connected to the receiving module RXa are/is lower than an input current threshold or an input voltage threshold required by a load 3 that is connected to the receiving module RXa, the receiving module RXa may generate a feedback signal and transmit the feedback signal to the transmitting module TX through the isolation module 12. When the transmitting module TX receives the feedback signal, the transmitting module TX or the another control module at the electric energy transmit end may increase a value of the transmit parameter, such as the transmit current or the transmit voltage of the primary coil 101, based on indication of the feedback signal. For another example, when the input current and/or the input voltage of the secondary coil 102a that is connected to the receiving module RXa are/is higher than the input current threshold or the input voltage threshold required by the load 3 that is connected to the receiving module RXa, the receiving module RXa may generate a feedback signal, and transmit the feedback signal to the transmitting module TX through the isolation module 12. When the transmitting module TX receives the feedback signal, the transmitting module TX or the another control module at the electric energy transmit end may reduce the value of the transmit parameter, such as the transmit current or the transmit voltage of the primary coil 101, based on indication of the feedback signal. In other words, the feedback receiving module RX herein may generate the corresponding feedback signal by using the input parameter of the secondary coil 102 that is connected to the feedback receiving module RX, and then adjust the transmit parameter of the primary coil 101 based on the feedback signal, thereby improving power supply efficiency and power supply stability while satisfying a requirement for safe power supply.

In some feasible implementations, the isolation module 12 may include at least one of a transformer, an optocoupler, or a capacitor, to implement an electrical isolation function. Herein, when the feedback receiving module RX transmits the feedback signal to the transmitting module TX, the isolation module 12 may provide electrical isolation for the feedback receiving module RX and the transmitting module TX, thereby ensuring power supply safety.

In this application, functional modules in the isolated power chip are formed flexibly in diversified manners to adapt to different application scenarios, thereby improving diversity of application scenarios of the isolated power chip and enhancing adaptability of the isolated power chip. In addition, any one of the isolated power chips shown in FIG. 1 to FIG. 10 can provide a plurality of output ends satisfying an electrical isolation requirement and space utilization is high, thereby improving integration and applicability of a device and reducing design costs. This application further provides a power conversion device. The power conversion device may include a plurality of any one of the isolated power chips shown in FIG. 1 to FIG. 10.

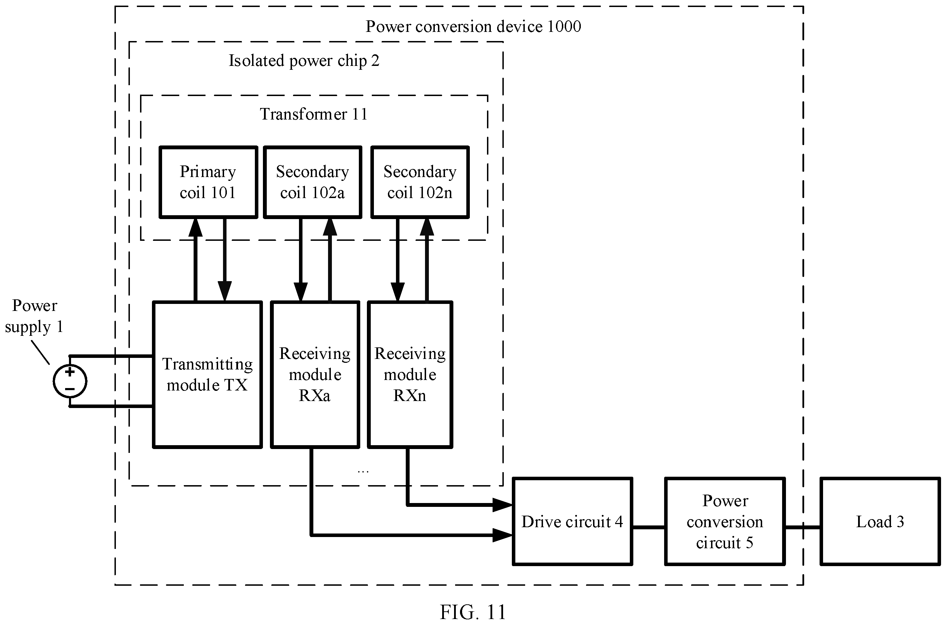

Specifically, refer to FIG. 11. FIG. 11 is a diagram of a structure of a power conversion device according to an embodiment of this application. As shown in FIG. 11, the power conversion device 1000 may include the isolated power chip 2 according to any one of possible implementations shown in FIG. 1 to FIG. 10, a drive circuit 4, and a power conversion circuit 5. Herein, an input end of the isolated power chip 2 may be configured to connect to a power supply 1, output ends of a plurality of receiving modules RX may be configured to connect to the power conversion circuit 5 through the drive circuit 4, and an output end of the power conversion circuit 5 may be configured to connect to a load 3. Herein, the drive circuit 4 may be configured to receive electric energy provided by the isolated power chip 2, and drive the power conversion circuit 5 to perform power conversion. Herein, the isolated power chip 2 may maintain a capability of isolating a power supply end from the drive circuit 4 when a voltage at the power supply end is very high, so that a plurality of channels of drive voltages may be provided separately for the drive circuit 4 while a requirement for safe power supply is satisfied, to adapt to different application scenarios and improve integration of the chip. In this way, the drive circuit 4 may transmit a corresponding drive signal to the power conversion circuit 5, so that power is supplied to the load 3 after the power conversion circuit 5 performs corresponding power conversion on the electric energy. Herein, the electric energy received by the power conversion circuit 5 may be electric energy directly provided by the power supply 1 or electric energy provided by another functional module, or may be electric energy provided by another power supply. For example, the load 3 may be an electric vehicle, and the isolated power chip 2 may convert a high voltage provided by the power supply 1 (for example, a power grid) into a low chip-level voltage and provide some low reference drive voltages for the drive circuit 4, to provide the drive circuit 4 with electric energy required by the drive circuit 4. Herein, the drive circuit 4 may generate a drive signal, and then drive the power conversion circuit 5 by using the drive signal, so that the power conversion circuit 5 may perform, based on the drive signal, corresponding power conversion on the electric energy transmitted by the power supply 1 or the another power supply, and transmit electric energy that is obtained following the power conversion to the load 3, for example, to provide power for the electric vehicle. It may be understood that the foregoing examples are merely some feasible implementations provided in this application. The power conversion device 1000 and the isolated power chip 2 provided in this application may be applied to any application scenario in which an electrical isolation requirement needs to be satisfied and a plurality of channels of electric energy output are needed. This is not limited herein.

In this application, the isolated power chip can provide a plurality of output ends satisfying an electrical isolation requirement and space utilization is high, thereby improving integration and applicability of a device and reducing design costs.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An isolated power chip, wherein the isolated power chip comprises a transformer, a transmitting module, and a plurality of receiving modules, the transformer, the transmitting module, and the plurality of receiving modules are packaged in a same housing, and the transformer comprises a primary coil and a plurality of secondary coils;
an input end of the transmitting module is configured to connect to a power supply, an output end of the transmitting module is connected to the primary coil, an input end of each receiving module is separately connected to one of the secondary coils, and an output end of each receiving module is configured to connect to a load;
the transmitting module is configured to transmit, to each secondary coil through the primary coil, electric energy provided by the power supply; and
each receiving module is configured to transmit the electric energy to the load through the connected secondary coil.

2. The isolated power chip according to claim 1, wherein the plurality of receiving modules comprise at least one feedback receiving module, the isolated power chip further comprises an isolation module, and the feedback receiving module is connected to the transmitting module through the isolation module;
the feedback receiving module is further configured to generate a feedback signal based on an input current and/or an input voltage of the secondary coil that is connected to the feedback receiving module, and transmit the feedback signal to the transmitting module through the isolation module; and
the transmitting module is further configured to adjust a transmit current and/or a transmit voltage of the primary coil based on the feedback signal.

3. The isolated power chip according to claim 1 or 2, wherein the primary coil and the plurality of secondary coils of the transformer are planar coils.

4. The isolated power chip according to any one of claims 1 to 3, wherein the primary coil and the plurality of secondary coils are arranged on a same plane.

5. The isolated power chip according to any one of claims 1 to 3, wherein the primary coil is arranged on one plane, and the plurality of secondary coils are arranged on another plane.

6. The isolated power chip according to any one of claims 1 to 3, wherein the primary coil is arranged on one plane, the plurality of secondary coils are separately arranged on a plurality of other planes, and one or more of the secondary coils are arranged on each of the plurality of other planes.

7. The isolated power chip according to any one of claims 1 to 6, wherein the transformer further comprises a magnetic core, and the magnetic core is arranged on periphery of the primary coil and the plurality of secondary coils.

8. The isolated power chip according to claim 7, wherein the magnetic core is a magnetic core of an integral structure or a magnetic core formed by combining a plurality of partial structures.

9. The isolated power chip according to any one of claims 1 to 8, wherein the isolation module comprises at least one of a transformer, an optocoupler, or a capacitor.

10. A power conversion device, wherein the power conversion device comprises the isolated power chip according to any one of claims 1 to 9, a drive circuit, and a power conversion circuit, output ends of the plurality of receiving modules are configured to connect to the power conversion circuit through the drive circuit, and an output end of the power conversion circuit is configured to connect to the load; and
the drive circuit is configured to receive electric energy provided by the isolated power chip, and drive the power conversion circuit to perform power conversion.
